# FASCICULE DE BREVET EUROPEEN

(11) **EP 3 437 255 B1**
(45) Date de publication et mention de la délivrance du brevet: **21.10.2020**
(21) Numéro de dépôt: 17713679.3
(22) Date de dépôt: 28.03.2017
(51) Int. Cl.: H04W 52/02, H04L 29/08, H04L 29/06, H04L 12/24, H04W 24/02

(54) **PROCÉDÉ D'ACTIVATION D'UN OBJET CONNECTÉ**
VERFAHREN ZUR AKTIVIERUNG EINES ANGESCHLOSSENEN OBJEKTS
METHOD FOR ACTIVATING A CONNECTED OBJECT

(30) Priorité: 30.03.2016 FR 1652726
(43) Date de publication de la demande: 06.02.2019
(73) Titulaire: Sagemcom Energy & Telecom SAS, 92500 Rueil-Malmaison (FR)
(72) Inventeur: TEBOULLE, Henri, 92500 RUEIL MALMAISON (FR); LECAPPON, Jean-Paul, 92500 RUEIL MALMAISON (FR)
(74) Mandataire: Cabinet Le Guen Maillet
(86) Numéro de dépôt international: PCT/EP2017/057263
(87) Numéro de publication internationale: WO 2017/167721

(56) Documents cités:
- EP-A1- 2 573 948
- US-A1- 2007 118 530
- US-A1- 2016 050 566
- N Sornin ET AL: "LoRa Specification V1.0", LoRa Alliance Inc., 31 janvier 2015 (2015-01-31), XP055286529, Extrait de l'Internet: URL:https://www.lora-alliance.org/portals/ 0/specs/LoRaWAN Specification 1R0.pdf [extrait le 2016-07-07]

## Description

L'invention concerne un procédé d'activation d'un objet connecté destiné à fonctionner dans un réseau sans fil à grande portée et permettant une faible consommation d'énergie, des dispositifs et un système mettant en œuvre le procédé.

L'Internet se transforme progressivement en un réseau étendu, appelé « Internet des objets », reliant toutes sortes d'objets devenus connectables qu'on appelle « *objets connectés* ». La demande de brevet européen EP 2573948 A1 publiée le 27 mars 2013 décrit une procédure de mise en service de deux appareils établissant une connexion sécurisée et/ou une relation de contrôle impliquant des paramètres échangés sur une courte distance.

De nouveaux besoins en termes de réseaux sont alors apparus, et notamment des besoins en réseaux sans fil ayant une plus grande couverture que des réseaux cellulaires classiques et permettant de limiter une consommation d'énergie des objets connectés. Parmi ces réseaux sans fil à grande portée et permettant une faible consommation d'énergie (« Low Power Wide Area Network (LPWAN) » en terminologie anglo-saxonne), on peut citer des réseaux basés sur la technologie LoRa (« Long Range » en terminologie anglo-saxonne) et des réseaux basés sur une technologie de communication développée par la société SIGFOX, dite technologie SIGFOX. Les technologies LoRa et SIGFOX opèrent sur des bandes de fréquences connues sous l'appellation « *Bande ISM* » (Industrie, Science et Médical) comprenant des bandes de fréquences pouvant être utilisées librement pour des applications industrielles, scientifiques et médicales.

La technologie LoRa est basée sur une technologie d'étalement de spectre permettant d'obtenir des communications bas débit ayant une bonne robustesse dans une bande ISM particulièrement bruitée.

La technologie SIGFOX est basée sur une technologie de modulation en bande ultra étroite (« Ultra Narrow Band Modulation (UNBM) » en terminologie anglo-saxonne) aussi appelée modulation avec bandes latérales très réduites (« Very Minimum Sideband Keying (VMSK) » en terminologie anglo-saxonne) ou simplement modulation avec bandes latérales minimum (« Minimum SideBand » en terminologie anglo-saxonne).

Un réseau basé sur la technologie LoRa (appelé « réseau LoRa » par la suite) est composé de stations de base ou passerelles (« gateways » en terminologie anglo-saxonne) généralement placées sur des points hauts afin de couvrir une grande zone géographique. Les passerelles sont aptes à détecter des messages émis dans leur zone par des objets connectés (appelés aussi « *équipements* » ou « *terminaux »* (*« endpoints* » en terminologie anglo-saxonne) et de les remonter vers au moins un serveur centralisé (« LoRa Network Server (LNS) » en terminologie anglo-saxonne) qui les traitera.

Dans un réseau LoRa, un objet connecté n'est pas rattaché à une passerelle. Toutes les passerelles à portée d'un objet connecté peuvent servir de relai entre ledit objet connecté et le serveur centralisé. Si une passerelle parvient à décoder un message émis par un objet connecté (voie montante), alors elle le retransmet au serveur centralisé pour traitement. Si un message doit être transmis d'un serveur centralisé audit objet connecté (voie descendante), c'est le serveur centralisé qui se chargera de déterminer quelle passerelle doit relayer le message.

L'une des propriétés recherchées dans les réseaux LPWAN est donc une faible consommation d'énergie. Cette propriété concerne les passerelles, mais aussi les objets connectés eux-mêmes. Il ne s'agit pas en effet de compenser une faible consommation d'énergie de la part des passerelles par une consommation d'énergie importante de la part des objets connectés. L'objet connecté doit lui-même avoir une faible consommation d'énergie. Certains objets connectés sont autonomes et intègrent leur source d'énergie, par exemple, sous forme de batteries. Pour des questions de fiabilité, de résistance et d'étanchéité, certains objets connectés, par exemple destinés à être en extérieur, ne sont pas conçus pour faire l'objet d'un rechargement ou d'un changement de leur source d'énergie. Seule l'énergie embarquée dans leur source d'énergie en sortie d'usine peut être utilisée pendant toute la durée de vie de l'objet connecté. Par conséquent, pour maximiser la durée de vie de l'objet connecté, il est préférable que, tant que l'objet connecté n'est pas effectivement inséré dans le réseau LPWAN, celui-ci ne consomme pas ou consomme *a minima* l'énergie contenue dans sa source d'énergie. Or, tant que l'objet connecté n'est pas activé, celui-ci ne sait pas qu'il est connecté au réseau LPWAN. Une solution possible serait d'introduire un moyen d'activation tel qu'un interrupteur sur l'objet connecté pour l'activer. Toutefois, il est connu que l'introduction d'un interrupteur sur un dispositif nuit, notamment, à l'étanchéité dudit dispositif, ce qui est incompatible avec des objets connectés destinés à être installés en extérieur ou immergés. Par ailleurs, un interrupteur peut être manipulé par des personnes non habilitées à activer ou désactiver l'objet connecté.

Il est souhaitable de pallier ces inconvénients de l'état de la technique. Il est notamment souhaitable de proposer une méthode pour activer un objet connecté lors de son insertion dans le réseau LPWAN. Par ailleurs, la méthode pour activer l'objet connecté doit de préférence être sécurisée afin d'éviter que des personnes non-habilitées procèdent à l'activation de l'objet connecté.

Il est de plus souhaitable de proposer une méthode qui soit simple à mettre en œuvre et à faible coût. La présente invention est définie par l'objet des revendications indépendantes. Des modes de réalisation avantageux sont définis dans les revendications dépendantes.

Selon un premier aspect de la présente invention, la présente invention concerne un procédé d'activation d'un objet connecté destiné à fonctionner dans un réseau sans fil à grande portée et permettant une faible consommation d'énergie. Le procédé comprend lorsqu'il est mis en œuvre par l'objet connecté : détecter (301) un premier signal transmis par un dispositif externe; lorsque le premier signal possède des caractéristiques prédéfinies, passer l'objet connecté d'un mode de veille à un mode actif, seul un module de l'objet connecté destiné à détecter le premier signal étant activé dans le mode de veille; recevoir un second signal comprenant une signature de la part du dispositif externe; vérifier que la signature est conforme à une signature prédéfinie et, lorsque la signature est conforme à la signature prédéfinie, obtenir des paramètres de configuration, configurer l'objet connecté selon les paramètres de configuration obtenus et transmettre un message de demande de connexion audit réseau.

De cette manière, l'objet connecté consomme *a minima* l'énergie contenue dans sa source d'énergie tant qu'il n'est pas activé par le dispositif externe. De plus, il faut que le premier et le deuxième signal transmis par le dispositif externe aient des caractéristiques prédéfinies pour que l'objet connecté soit activé, ce qui empêche une activation par une personne non habilitée.

Dans un mode de réalisation, l'objet connecté est identifié par un premier identifiant d'objet connecté et le second signal comprend une information représentative d'un certificat du dispositif externe, une première empreinte calculée à partir dudit certificat et une information représentative d'un second identifiant d'objet connecté, la signature étant conforme à la signature prédéfinie lorsqu'une seconde empreinte calculée par l'objet connecté à partir dudit certificat est égale à une troisième empreinte calculée par l'objet connecté à partir de la première empreinte et lorsque l'information représentative du second identifiant d'objet connecté correspond au premier identifiant d'objet connecté.

Dans un mode de réalisation, les paramètres de configuration sont donnés par un dispositif externe dans le second signal, ou donnés par un serveur dudit réseau ou donnés par le dispositif externe dans le second signal et le serveur dudit réseau.

Dans un mode de réalisation, lorsqu'au moins une partie des paramètres de configuration est donnée par le serveur dudit réseau, suite à la transmission du message de demande de connexion audit réseau par l'objet connecté, l'objet connecté reçoit un message comprenant lesdits paramètres de la part dudit serveur.

Dans un mode de réalisation, suite à la transmission du message de demande de connexion audit réseau par l'objet connecté et préalablement à la réception du message comprenant lesdits paramètres, l'objet connecté reçoit un message d'autorisation de connexion au réseau de la part du serveur comprenant une information indiquant que le serveur a des paramètres de configuration à transmettre à l'objet connecté et transmet un message d'accusé de réception pour ledit message d'autorisation de manière à provoquer un envoi par le serveur du message comprenant lesdits paramètres.

Selon un deuxième aspect de l'invention, l'invention concerne un procédé d'activation d'un objet connecté destiné à fonctionner dans un réseau sans fil à grande portée et permettant une faible consommation d'énergie. Le procédé comprend lorsqu'il est mis en œuvre par un dispositif externe apte à démarrer l'objet connecté : émettre un premier signal à destination de l'objet connecté destiné à faire passer l'objet connecté d'un mode de veille à un mode actif, seul un module de l'objet connecté destiné à détecter le premier signal étant activé dans le mode de veille ; émettre un second signal comprenant une signature audit objet connecté et se mettre en attente d'une réception d'un message de demande de connexion audit réseau de la part de l'objet connecté ; et, mettre fin au procédé lorsqu'un message de demande de connexion est reçu.

Dans un mode de réalisation, après avoir émis le second signal, le dispositif externe se met en attente d'une réception d'un message de demande de connexion pendant une durée prédéfinie et réémet le premier et le second signal si, au terme de la durée prédéfinie, aucun message de demande de connexion n'est reçu par le dispositif externe.

Dans un mode de réalisation après avoir émis le second signal, ledit réseau est un réseau LoRa et chaque communication entre l'objet connecté et le serveur se fait par l'intermédiaire d'une passerelle dudit réseau.

Selon un troisième aspect de l'invention, l'invention concerne un dispositif de type objet connecté comprenant des moyens pour mettre en œuvre le procédé selon le premier aspect.

Selon un quatrième aspect de l'invention, l'invention concerne un dispositif comprenant des moyens pour mettre en œuvre le procédé selon le deuxième aspect.

Selon un cinquième aspect de l'invention, l'invention concerne un système comprenant un dispositif selon le troisième aspect et un dispositif selon le quatrième aspect.

Selon un sixième aspect de l'invention, l'invention concerne un programme d'ordinateur comprenant des instructions pour mettre en œuvre, par un dispositif, le procédé selon le premier aspect ou le procédé selon le deuxième aspect, lorsque ledit programme est exécuté par un processeur dudit dispositif.

Selon un septième aspect, l'invention concerne des moyens de stockage stockant un programme d'ordinateur comprenant des instructions pour mettre en œuvre, par un dispositif, le procédé selon le premier aspect ou le procédé selon le deuxième aspect, lorsque ledit programme est exécuté par un processeur dudit dispositif.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
- la Fig. 1 illustre schématiquement un réseau LPWAN dans lequel est mise en œuvre l'invention ;
- la Fig. 2A illustre schématiquement un module de traitement compris dans un dispositif externe ;
- la Fig. 2B illustre schématiquement un module de traitement compris dans un objet connecté ;
- la Fig. 3A illustre schématiquement un premier exemple de procédé d'activation d'un objet connecté selon l'invention;
- la Fig. 3B illustre schématiquement un deuxième exemple de procédé d'activation d'un objet connecté selon l'invention ;
- la Fig. 4A illustre schématiquement un message LoRa autorisant un objet connecté à s'insérer dans un réseau LoRa ;
- la Fig. 4B illustre schématiquement un champ du message LoRa autorisant un objet connecté à s'insérer dans un réseau LoRa ; et,
- la Fig. 5 illustre schématiquement un message LoRa permettant à un serveur d'un réseau Lora de transmettre des paramètres de configuration à un objet connecté.

L'invention est décrite par la suite dans un contexte de réseau LoRa. L'invention s'applique toutefois dans d'autres contextes pour tous types de réseaux sans fil à grande portée et permettant une faible consommation d'énergie tels qu'un réseau basé sur la technologie SIGFOX.

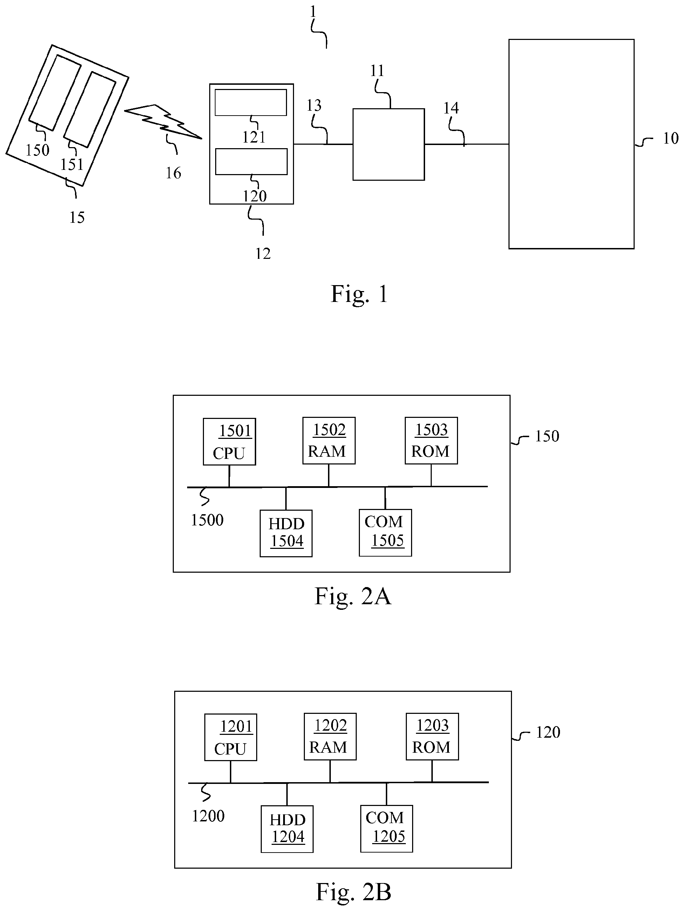

La **Fig. 1** illustre schématiquement un réseau LoRa 1 dans lequel est mise en œuvre l'invention.

Dans l'exemple de la Fig. 1, le réseau LoRa 1 comprend un serveur LNS 10, une passerelle 11 et un objet connecté 12. La passerelle 11 communique avec le serveur LNS 10 par l'intermédiaire d'un lien de communication filaire ou sans fil 14. La passerelle 11 communique avec l'objet connecté 12 par l'intermédiaire d'un lien de communication sans fil 13.

Un dispositif 15, externe au réseau LoRa 1, dit *dispositif externe* 15, est représenté. Le dispositif externe 15 est manipulé par un opérateur et est utilisé pour activer l'objet connecté 12 de manière sécurisée. Pour ce faire, le dispositif externe 15 comprend un module 151 d'émission d'un signal d'activation apte à activer de manière sécurisée l'objet connecté 12. Le module d'émission 151 est par exemple un module d'émission d'un signal lumineux ou un module d'émission d'un signal électromagnétique. Le dispositif externe 15 est par exemple un téléphone intelligent (« smart phone » en terminologie anglo-saxonne) ou un dispositif dédié.

L'objet connecté 12 comprend un module de réception 121 adapté pour recevoir le signal d'activation émis par le dispositif externe 15.

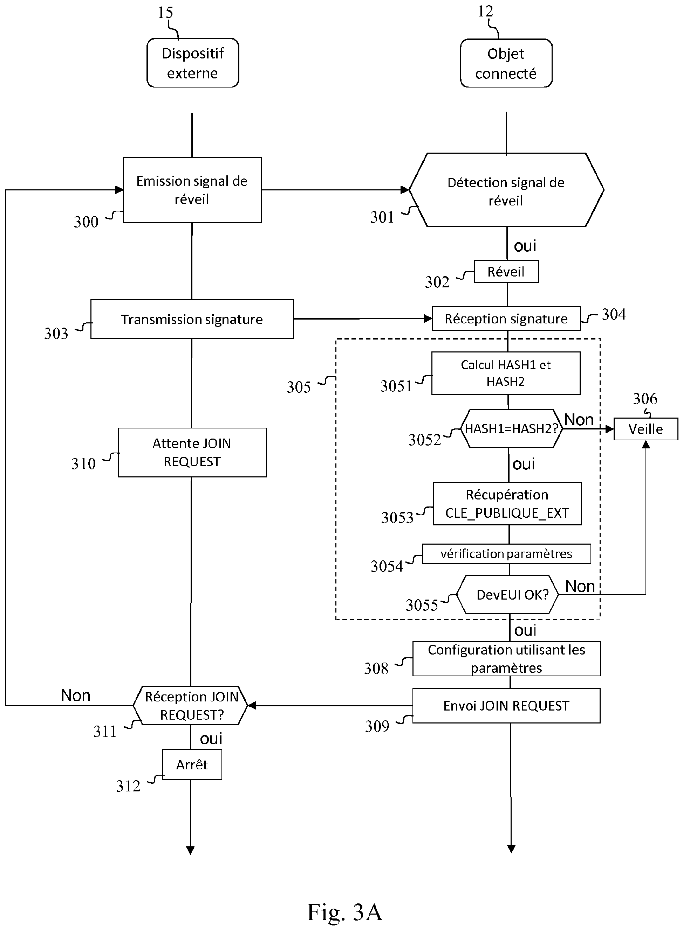

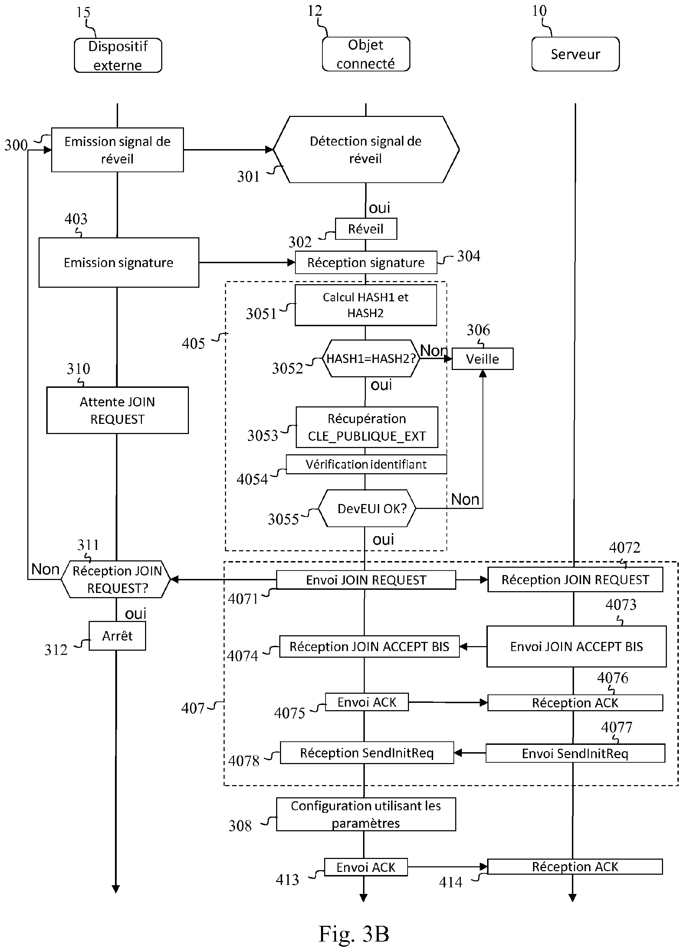

Par ailleurs, le dispositif externe 15 (respectivement l'objet connecté 12) comprend un module de traitement 150 (respectivement 120) apte à mettre en œuvre des étapes de procédés selon l'invention décrits en relation avec les Figs. 3A et 3B.

On note que les communications entre l'objet connecté 12 et la passerelle 11 utilisent des messages (ou trames) compatibles avec le protocole LoRaWAN, les messages étant transmis en mode multidiffusion (« broadcast » en terminologie anglo-saxonne). Le document LoRaWAN 1.1 (« draft LoRaWAN 1. 1 » en terminologie anglo-saxonne) d'août 2015 définit les communications entre les objets connectés et les passerelles d'un réseau LoRa. Les messages compatibles avec le protocole LoRaWAN sont appelés messages LoRa par la suite.

La **Fig. 2A** illustre schématiquement un exemple d'architecture matérielle du module de traitement 150 compris dans le dispositif externe 15.

Selon l'exemple d'architecture matérielle représenté à la Fig. 2A, le module de traitement 150 comprend alors, reliés par un bus de communication 1500 : un processeur ou CPU (« Central Processing Unit » en anglais) 1501 ; une mémoire vive RAM (« Random Access Memory » en anglais) 1502 ; une mémoire morte ROM (« Read Only Memory » en anglais) 1503 ; une unité de stockage telle qu'un disque dur ou un lecteur de support de stockage, tel qu'un lecteur de cartes SD (« Secure Digital » en anglais) 1504 ; au moins une interface de communication 1505 permettant au module de traitement 150 de communiquer avec d'autres modules ou dispositifs. Par exemple l'interface de communication 1505 permet au module de traitement 150 de recevoir des messages LoRa en provenance de l'objet connecté 12 ou de la passerelle 11.

Le processeur 1501 est capable d'exécuter des instructions chargées dans la RAM 1502 à partir de la ROM 1503, d'une mémoire externe (non représentée), d'un support de stockage (tel qu'une carte SD), ou d'un réseau de communication. Lorsque le dispositif externe 15 est mis sous tension, le processeur 1501 est capable de lire de la RAM 1502 des instructions et de les exécuter. Dans un mode de réalisation, ces instructions forment un programme d'ordinateur causant la mise en œuvre par le processeur 1501, d'étapes des procédés décrits ci-après en relation avec les Figs. 3A et 3B.

Les étapes des procédés décrits en relation avec les Figs. 3A et 3B mises en œuvre par le dispositif externe 15 peuvent être implémentées sous forme logicielle par exécution d'un ensemble d'instructions par une machine programmable, par exemple un DSP (« Digital Signal Processor » en anglais) ou un microcontrôleur, ou être implémentées sous forme matérielle par une machine ou un composant dédié, par exemple un FPGA (« Field-Programmable Gâte Array » en anglais) ou un ASIC (« Application-Specific Integrated Circuit » en anglais).

La **Fig. 2B** illustre schématiquement un exemple d'architecture matérielle du module de traitement 120 compris dans l'objet connecté 12.

Selon l'exemple d'architecture matérielle représenté à la Fig. 2B, le module de traitement 120 comprend alors, reliés par un bus de communication 1200 : un processeur ou CPU 1201 ; une mémoire vive RAM 1202 ; une mémoire morte ROM 1203 ; une unité de stockage telle qu'un disque dur ou un lecteur de support de stockage, tel qu'un lecteur de cartes SD 1204 ; au moins une interface de communication 1205 permettant au module de traitement 120 de communiquer avec d'autres modules ou dispositifs. Par exemple, l'interface de communication 1205 permet au module de traitement 120 de communiquer avec le serveur LNS 10 par l'intermédiaire de la passerelle 11 ou de transmettre des messages LoRa au dispositif externe 15.

Le processeur 1201 est capable d'exécuter des instructions chargées dans la RAM 1202 à partir de la ROM 1203, d'une mémoire externe (non représentée), d'un support de stockage (tel qu'une carte SD), ou d'un réseau de communication. Lorsque l'objet connecté 12 passe d'un mode de veille à un mode actif ou lorsque l'objet connecté est dans le mode actif, le processeur 1201 est capable de lire de la RAM 1202 des instructions et de les exécuter. Ces instructions forment un programme d'ordinateur causant la mise en œuvre, par le processeur 1201, d'étapes des procédés décrits ci-après en relation avec les Figs. 3A et 3B.

Les étapes des procédés décrits en relation avec les Figs. 3A et 3B mises en œuvre par l'objet connecté 12 peuvent être implémentées sous forme logicielle par exécution d'un ensemble d'instructions par une machine programmable, par exemple un DSP (« Digital Signal Processor » en anglais) ou un microcontrôleur, ou être implémentées sous forme matérielle par une machine ou un composant dédié, par exemple un FPGA (« Field-Programmable Gâte Array » en anglais) ou un ASIC (« Application-Specific Integrated Circuit » en anglais).

La **Fig. 3A** illustre schématiquement un premier exemple de procédé d'activation d'un objet connecté selon l'invention.

Dans le procédé décrit en relation avec la Fig. 3A, seul le dispositif externe 15 et l'objet connecté 12 sont impliqués dans l'activation de l'objet connecté 12.

Dans l'exemple de la Fig. 3A, l'objet connecté 12 est un capteur de température externe comprenant un module de mesure de température et un module d'horloge non représentés. Ce capteur de température est apte à mesurer des températures et à détecter des températures anormalement hautes ou anormalement basses. Un premier seuil de température en dessous duquel une température est considérée comme anormalement basse et un second seuil de température au-dessus duquel une température est considérée comme anormalement haute sont paramétrables lors de l'activation de l'objet connecté 12. Par ailleurs, le module d'horloge peut aussi être ajusté pendant l'activation de l'objet connecté 12. L'objet connecté 12 peut fonctionner suivant deux modes : un mode de veille et un mode actif. Dans le mode de veille, seul le module de réception 121 de l'objet connecté 12 est activé afin que l'objet connecté 12 puisse détecter un éventuel signal d'activation. Le mode de veille consomme donc peu d'énergie. Dans un mode de réalisation, dans le mode actif, tous les modules de l'objet connecté 12 sont activés. Tant que l'objet connecté 12 n'a pas été activé par le dispositif externe 15, l'objet connecté 12 est dans le mode de veille. Lorsque l'objet connecté 12 est dans le mode actif, il est apte à envoyer des messages LoRa au serveur LNS 10 lorsque des températures anormales sont mesurées. Ces messages LoRa comprennent alors une température anormale mesurée et une information représentative de l'instant de mesure de cette température. L'objet connecté 12 possède un identifiant sous forme d'une adresse MAC (« Media Access Control » en terminologie anglo-saxonne), nommée DevEUI, permettant d'identifier de manière unique l'objet connecté 12.

Le dispositif externe 15 dispose d'une clé privée CLE_PRIVEE_EXT qui lui a été attribuée. Le dispositif externe en déduit une clé publique CLE_PUBLIQUE_EXT en appliquant une fonction de transfert de cryptage à la clé privée CLE_PRIVEE_EXT. Le cryptage est par exemple de type courbes elliptiques. Le dispositif externe 15 dispose de plus d'un certificat relatif à un procédé de signature qu'il peut utiliser pour signer des données à partir de sa clé privée CLE_PRIVEE_EXT. Ce certificat a été attribué par une autorité de certification qui a une clé publique CLE_PUBLIQUE_AC et une clé privée CLE_PRIVEE_AC. De nouveau, le procédé de signature est de type courbes elliptiques. Avant l'activation de l'objet connecté 12, le dispositif externe 15 a été paramétré, par exemple par un opérateur, de sorte qu'il connaît l'adresse MAC de l'objet connecté 12.

Dans une étape 300, le dispositif externe 15, par l'intermédiaire de son module d'émission d'un signal d'activation 151 et sous le contrôle du module de traitement 150, émet un premier signal à destination de l'objet connecté 12. Le premier signal émis par le dispositif externe 15 est destiné à faire passer l'objet connecté 12 du mode de veille au mode actif. Un signal d'activation apte à faire passer l'objet connecté 12 du mode de veille au mode actif est par exemple un signal lumineux ayant des caractéristiques prédéfinies telles qu'une durée au moins égale à une durée prédéfinie *D* (par exemple de *D* = 500 ms) et une intensité lumineuse au moins égale à une valeur d'intensité lumineuse prédéfinie *L* (par exemple *L*=5 lumen).

Dans un mode de réalisation, le signal d'activation est un signal magnétique ayant une durée au moins égale à une durée prédéfinie *D**(par exemple de *D** = 500 ms) et une intensité au moins égale à une valeur d'intensité *B* (par exemple *B*=1 Tesla).

Dans une étape 301, le module de réception 121 de l'objet connecté 12 détecte le premier signal. Lorsque le module de réception 121 détecte que le premier signal possède les caractéristiques prédéfinies représentatives d'un signal d'activation, *i.e.* par exemple lorsque une durée *d* du premier signal est supérieure ou égale à *D* et lorsqu'une intensité lumineuse *l* du premier signal est supérieure ou égale à *L*, le module de réception 121 fait passer l'objet connecté 12 du mode de veille au mode actif lors d'une étape 302. Lors de l'étape 302, l'ensemble des modules de l'objet connecté 12 et notamment le module de traitement 120, le module de mesure de température et le module d'horloge sont activés. Lorsque *d < D* ou *l < L,* le module de réception 121 considère que le signal lumineux n'est pas un signal d'activation. L'objet connecté 12 reste alors dans le mode de veille.

Dans une étape 303, le dispositif externe 15, par l'intermédiaire de son module d'émission d'un signal d'activation 151 et sous le contrôle du module de traitement 150, transmet un deuxième signal comprenant une signature. Dans un mode de réalisation, le deuxième signal est par exemple un signal lumineux utilisant une technologie de communication sans fils basée sur l'utilisation de la lumière visible appelée Li-Fi (abréviation de « Light Fidelity » en terminology anglo-saxonne). Un principe de la technologie Li-Fi repose sur un codage et un envoi de données via une modulation d'amplitude de sources de lumière (scintillations imperceptibles à l'œil), selon un protocole standardisé.

Dans un mode de réalisation, le deuxième signal est un train d'impulsions magnétiques périodique ayant une période prédéfinie. Chaque impulsion ayant une intensité prédéfinie. Une transmission d'une impulsion pendant une période indiquant un bit à « 1 ». Une non transmission d'une impulsion pendant une période indiquant une bit à « 0 ». Le train d'impulsions magnétiques est donc représentatif d'un mot binaire apte à transporter des informations.

La signature comprend *M* octets représentatifs du certificat du dispositif externe 15 et *N* octets représentatifs d'une empreinte (« Hash » en terminologie anglo-saxonne) de certificat (SIGNED_HASH) calculée à partir du certificat du dispositif externe 15. Le certificat est transmis non crypté (*i.e.* transmis en clair) et intègre la clé publique CLE_PUBLIQUE_EXT du dispositif externe 15. L'empreinte de certificat SIGNED_HASH a été calculée par l'autorité de certification en appliquant tout d'abord une fonction de hachage HASH au certificat (fonction SHA-256 (« Secure Hash Algorithm » en terminologie anglo-saxonne : fonction de hachage opérant sur des tailles de mots de 256 bits) typiquement), puis en chiffrant le résultat à partir de la clé privée CLE_PRIVEE_AC.

La signature comprend, en outre, *p* octets représentatifs de l'adresse MAC DevEUI de l'objet connecté 12. Dans un mode de réalisation, cette adresse MAC DevEUI a été signée par le module de traitement 150 en utilisant le procédé de signature avant son insertion dans la signature.

Dans l'exemple de procédé décrit en relation avec la Fig. 3A, le deuxième signal comprend en outre *P* octets représentatifs de paramètres de configuration de l'objet connecté 12. Dans l'exemple du capteur de température, les paramètres de configuration sont:
- Un paramètre SEUIL_TEMP_BAS représentatif du premier seuil de température codé sur un octet ;
- Un paramètre SEUIL_TEMP_HAUT représentatif du second seuil de température codé sur un octet ;
- Un paramètre ANNEE codé sur un octet ;
- Un paramètre MOIS codé sur un octet ;
- Un paramètre JOUR codé sur un octet ;
- Un paramètre HEURE codé sur un octet ;
- Un paramètre MINUTE codé sur un octet ;
- Un paramètre SECONDE codé sur un octet.

Les paramètres ANNEE, MOIS, JOUR, HEURE, MINUTE, SECONDE servent à ajuster le module d'horloge de l'objet connecté 12. Dans un mode de réalisation, les paramètres de configuration ont été signés par le module de traitement 150 en utilisant le procédé de signature avant leur insertion dans la signature.

Dans une étape 304, le module de traitement 120 de l'objet connecté 12 reçoit le deuxième signal en provenance du dispositif externe 15 par l'intermédiaire de son module de réception 121.

Dans une étape 305, le module de traitement 120 vérifie que la signature est conforme à une signature prédéfinie.

Pour ce faire, dans une étape 3051, le module de traitement 120 calcule une empreinte HASH1 sur les *M* octets représentatifs du certificat du dispositif externe 15 en appliquant la fonction HASH au certificat. Puis, le module de traitement 120 applique la clé publique CLE_PUBLIQUE_AC à l'empreinte de certificat SIGNED_HASH pour obtenir une empreinte HASH2.

Dans une étape 3052, le module de traitement 120 compare l'empreinte HASH1 à l'empreinte HASH2. Si les deux empreintes sont identiques, le module de traitement considère que la signature provient d'un dispositif externe certifié et passe à une étape 3053.

Si les deux empreintes diffèrent, le module de traitement 120 fait passer l'objet connecté 12 dans le mode de veille dans une étape 306.

Lors de l'étape 3053, le module de traitement 3053 récupère la clé publique CLE_PUBLIQUE_EXT intégrée au certificat.

Dans une étape 3054, le module de traitement 120 utilise la clé publique CLE_PUBLIQUE_EXT pour vérifier l'intégrité des paramètres de configuration et authentifier le dispositif externe 15 en déduisant l'adresse MAC et les paramètres de configuration contenus dans le deuxième signal en appliquant un procédé de vérification correspondant au procédé de signature appliqué par le module de traitement 150.

Dans une étape 3055, le module de traitement 120 vérifie que l'adresse MAC contenue dans le second signal correspond à son adresse MAC DevEUI. Si l'adresse MAC contenue dans le second signal correspond à l'adresse MAC DEVEUI la vérification de la signature prend fin. Le module de traitement 120 considère en effet que non seulement la signature a été générée par un dispositif externe certifié et que cette signature était bien adressée à l'objet connecté 12. L'étape 3055 est alors suivie d'une étape 308. Si, par contre, l'adresse MAC contenue dans le second signal ne correspond pas à l'adresse MAC DevEUI, le module de traitement 120 considère que la vérification de la signature a échoué (*i.e.* la signature reçue n'était pas destinée à l'objet connecté 12). Le module de traitement 120 fait alors passer l'objet connecté 12 dans le mode de veille lors de l'étape 306.

Dans une étape 308, le module de traitement 120 configure l'objet connecté 12 avec les paramètres de configuration obtenus.

Dans une étape 309, le module de traitement transmet un message LoRa en mode multidiffusion correspondant à une demande de connexion au réseau LoRa 1. Le message utilisé est un message JOIN REQUEST défini par le protocole LoRaWAN.

En parallèle à l'étape 305, dès la transmission du deuxième signal, le module de traitement 150 du dispositif externe 15 s'est mis en attente d'une réception d'un message JOIN REQUEST pendant une durée prédéfinie, égale par exemple à dix secondes, lors d'une étape 310. Si au terme de la durée prédéfinie, aucun message JOIN REQUEST n'est reçu par le dispositif externe 15, le module de traitement 150 met de nouveau en œuvre les étapes 300, 303 et 310. Si un message JOIN REQUEST est reçu pendant la durée prédéfinie, le module de traitement 150 met fin aux étapes du procédé décrit en relation avec la Fig. 3A mise en œuvre par le dispositif externe 15 lors d'une étape 312.

On note que le message JOIN REQUEST est aussi reçu par la passerelle 11 qui le retransmet au serveur LNS 10. La réception du message JOIN REQUEST par le serveur LNS 10 permet de finaliser la procédure d'insertion de l'objet connecté 12 dans le réseau LoRa 1 tel que décrit dans le protocole LoRaWAN.

La **Fig. 3B** illustre schématiquement un deuxième exemple de procédé d'activation d'un objet connecté selon l'invention.

Dans le procédé décrit en relation avec la **Fig. 3B**, le dispositif externe 15, l'objet connecté 12 et le serveur LNS 10 (et indirectement la passerelle 11) sont impliqués dans l'activation de l'objet connecté 12.

Dans l'exemple de la Fig. 3B, l'objet connecté 12 est un capteur de température externe identique au capteur de température décrit en relation avec la Fig. 3A et possède la même adresse MAC DevEUI.

Le dispositif externe 15 de la Fig. 3B est identique au dispositif externe décrit en relation avec la Fig. 3A. Il dispose donc de la même clé privée CLE_PRIVEE_EXT, en déduit la même clé publique CLE_PUBLIQUE_EXT en appliquant la même fonction de transfert de cryptage à la clé privée CLE_PRIVEE_EXT, dispose du même certificat relatif au même procédé de signature et a été paramétré avec l'adresse MAC de l'objet connecté 12.

Les étapes 300 à 302 de la Fig. 3B sont identiques aux étapes correspondantes décrites en relation avec la Fig. 3B.

Dans une étape 403 remplaçant l'étape 303, le dispositif externe 15, par l'intermédiaire de son module d'émission d'un signal d'activation 151 et sous le contrôle du module de traitement 150, transmet un deuxième signal comprenant une signature. Comme dans le cas de l'étape 303, le deuxième signal transmis lors de l'étape 403 est par exemple un signal lumineux utilisant la technologie Li-Fi. La signature comprend *M* octets représentatifs du certificat du dispositif externe 15 et *N* octets représentatifs d'une empreinte de certificat SIGNED_HASH calculée à partir du certificat du dispositif externe 15. Le certificat est transmis non crypté (*i.e.* transmis en clair) et intègre la clé publique CLE_PUBLIQUE_EXT du dispositif externe 15. L'empreinte du certificat SIGNED_HASH a été calculée par l'autorité de certification en appliquant tout d'abord la fonction HASH au certificat, puis en chiffrant le résultat à partir de la clé privée CLE_PRIVEE_AC.

La signature comprend, en outre, *p* octets représentatifs de l'adresse MAC DevEUI de l'objet connecté 12. Dans un mode de réalisation, cette adresse MAC DevEUI a été signée par le module de traitement 150 en utilisant le procédé de signature avant son insertion dans la signature.

Contrairement au deuxième signal transmis lors de l'étape 303, le deuxième signal transmis lors de l'étape 403 ne comprend aucun paramètre de configuration de l'objet connecté 12.

L'étape 304 de la Fig. 3B est identique à l'étape 304 décrite en relation avec la Fig. 3A.

Dans une étape 405 remplaçant l'étape 305, le module de traitement 120 vérifie que la signature transmise lors de l'étape 304 est conforme à une signature prédéfinie.

Pour ce faire, le module de traitement 120 met en œuvre les étapes 3051, 3052 et 3053 décrites en relation avec la Fig. 3A.

Lors d'une étape 4054 remplaçant l'étape 3054, le module de traitement 120 utilise la clé publique CLE_PUBLIQUE_EXT pour vérifier uniquement l'adresse MAC DevEUI contenue dans le deuxième signal en appliquant un procédé de vérification correspondant au procédé de signature appliqué par le module de traitement 150.

L'étape 4054 est suivie de l'étape 3055 déjà décrite en relation avec la Fig. 3A.

Si l'empreinte HASH1 calculée lors de l'étape 3051 diffère de l'empreinte HASH2 ou si l'adresse MAC comprise dans le deuxième signal diffère de l'adresse MAC DevEUI de l'objet connecté, comme dans la Fig. 3A, les étapes 3052 et 3055 sont suivies de l'étape 306 durant laquelle le module de traitement 120 remet l'objet connecté 12 dans le mode de veille.

Sinon, l'étape 3055 est suivie d'une étape 4071. Lors de l'étape 4071, le module de traitement 120 transmet un message JOIN REQUEST en mode multidiffusion.

En parallèle à l'étape 405, dès la transmission du deuxième signal, le module de traitement 150 du dispositif externe 15 met en œuvre l'étape 310 et se met en attente d'une réception d'un message JOIN REQUEST pendant une durée prédéfinie. Si au terme de la durée prédéfinie, aucun message JOIN REQUEST n'est reçu par le dispositif externe 15, le module de traitement 150 met de nouveau en œuvre les étapes 300, 403 et 310. Si un message JOIN REQUEST est reçu pendant la durée prédéfinie, le module de traitement 150 met en œuvre l'étape 312 au cours de laquelle il met fin aux étapes du procédé décrit en relation avec la Fig. 3B mise en œuvre par le dispositif externe 15.

Dans l'exemple de procédé décrit en relation avec la Fig. 3B, le serveur LNS 10 joue un rôle actif dans la configuration de l'objet connecté 12 puisque c'est lui qui fournit les paramètres de configuration de l'objet connecté 12.

Dans une étape 4072, le serveur LNS 10 reçoit le message JOIN REQUEST par l'intermédiaire de la passerelle 11.

Dans une étape 4073, en réponse au message JOIN REQUEST, le serveur LNS 10 transmet un message LoRa autorisant l'objet connecté 12 à s'insérer dans le réseau LoRa 1. Le message transmis par le serveur LNS lors de l'étape 4073 est très similaire à un message JOIN ACCEPT défini par le protocole LoRaWAN. Nous appelons ce message LoRa *message JOIN ACCEPT BIS.*

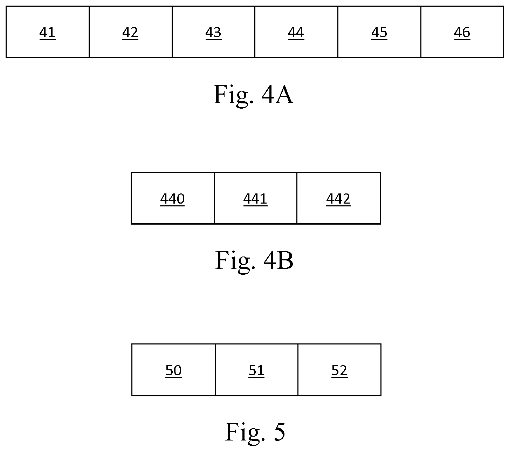

La **Fig. 4A** illustre schématiquement le message LoRa JOIN ACCEPT BIS autorisant l'objet connecté 12 à s'insérer dans le réseau LoRa 1.

Le message JOIN ACCEPT BIS comprend un champ *AppNonce* 41 codé sur trois octets, un champ *NetID* 42 codé sur trois octets, un champ *DevAddr* 43 codé sur quatre octets, un champ *RxDelay* 45 codé sur un octet et un champ *CFList* 46 optionnel codé sur seize octets. Les champs *AppNonce* 41, *NetID* 42, *DevAddr* 43, *RxDelay* 45 et *CFList* 46 sont identiques aux champs de mêmes noms des messages JOIN ACCEPT décrits dans le protocole LoRaWAN. Le message JOIN ACCEPT BIS comprend en outre un champ *DLSettings BIS* 44 codé sur un octet détaillé dans la Fig. 4B. Le champ *DLSettings BIS* 44 remplace un champ *DLSettings* présent dans les messages JOIN ACCEPT définis par le protocole LoRaWAN.

La **Fig. 4B** illustre schématiquement le champ *DLSettings BIS* 44 du message JOIN ACCEPT BIS.

Le champ *DLSettings BIS* 44 comprend un champ *RX1DRoffset* 441 codé sur trois bits et un champ *RX2 Data Rate* 442 codé sur 4 bits. Les champs *RX1DRoffset* 441 et *RX2 Data Rate* sont identiques aux champs de mêmes noms du champ *DLSettings* des messages JOIN ACCEPT décrits dans le protocole LoRaWAN. Le champ *DLSettings BIS* comprend en outre un champ *PARAM* 440 codé sur un bit. Ce champ *PARAM* remplace un champ *FPending* de même taille du champ *DLSettings.*

Le champ *PARAM* est utilisé par le serveur LNS 10 pour indiquer à l'objet connecté 12 que le serveur LNS 10 a des paramètres de configuration à transmettre à l'objet connecté 12. Lorsque le champ *PARAM* est à la valeur « 1 », le serveur LNS 10 a des paramètres de configuration à transmettre à l'objet connecté 12. Lorsque le champ *PARAM* est à la valeur « 0 », le serveur LNS 10 n'a pas de paramètre de configuration à transmettre à l'objet connecté 12.

Lors de l'étape 4073, le serveur LNS 10 transmet un message JOIN ACCEPT BIS dans lequel le champ *PARAM* est à « 1 » à l'objet connecté 12 par l'intermédiaire de la passerelle 11.

Lors d'une étape 4074, le module de traitement 120 reçoit le message JOIN ACCEPT BIS. Le module de traitement 120 sait alors que le serveur LNS 10 a des paramètres de configuration à lui transmettre.

Dans une étape 4075, le module de traitement 120 transmet au serveur LNS 10 un accusé de réception pour le message JOIN ACCEPT BIS.

Dans une étape 4076, le serveur LNS 10 transmet l'accusé de réception transmis lors de l'étape 4075. En réponse à cet accusé de réception, le serveur LNS 10 transmet à l'objet connecté 12 lors d'une étape 4077 un message LoRa de configuration appelé *sendInitReq.* Le message sendInitReq est utilisé par le serveur LNS 10 pour transmettre des paramètres de configuration à l'objet connecté 12.

La **Fig. 5** illustre schématiquement un message sendInitReq permettant au serveur LNS 10 de transmettre des paramètres de configuration à l'objet connecté 12.

Le message sendInitReq comprend un champ *MODE* 50 codé sur un octet, un champ *FPORT* 51 codé sur un octet et un champ *DATA* 52 de longueur variable.

Le champ *MODE* 50 indique si le message sendInitReq doit être acquitté ou pas par l'objet connecté 12 en utilisant un accusé de réception.

Le champ *FPORT* correspond au numéro de port logique utilisé pour l'envoi des messages.

Le champ *DATA* 52 comprend les paramètres de configuration destinés à l'objet connecté 12. Dans l'exemple où l'objet connecté 12 est un capteur de température, il permet de transmettre à l'objet connecté les paramètres SEUIL_TEMP_BAS, SEUIL_TEMP_HAUT, ANNEE, MOIS, JOUR, HEURE, MINUTE et SECONDE.

Dans une étape 4078, le module de traitement 120 reçoit le message sendInitReq contenant les paramètres de configuration.

On note que les étapes 4071 à 4078 peuvent être considérées comme une étape globale 407 permettant d'obtenir les paramètres de configuration.

Suite à la réception du message sendInitReq, le module de traitement configure l'objet connecté 12 selon les paramètres de configuration reçus lors de l'étape 308 déjà expliquée en relation avec la Fig. 3A.

Si le champ *MODE* du message sendInitReq indique que le message sendInitReq doit être acquitté, le module de traitement 120 met en œuvre l'étape 413 au cours de laquelle il transmet au serveur LNS 10 par l'intermédiaire de la passerelle 11 un accusé de réception pour le message sendInitReq.

Lors d'une étape 414, le serveur LNS 10 reçoit l'accusé de réception transmis lors de l'étape 413. Le serveur LNS 10 considère alors que la configuration de l'objet connecté 12 s'est déroulée correctement.

Dans un mode de réalisation, si suite à la transmission du message sendInitReq le serveur LNS 10 ne reçoit pas d'accusé de réception (alors qu'un accusé de réception était demandé dans le champ *MODE* du message sendInitReq) au terme d'une durée prédéfinie, par exemple de dix secondes, le serveur LNS 10 retransmet le message sendInitReq.

Dans un mode de réalisation, des paramètres de configuration sont transmis par le dispositif externe 15 dans le deuxième signal et des paramètres de configuration sont transmis par le serveur LNS 10 dans un message sendInitReq. Dans ce mode de réalisation, les étapes 300 à 306, 308 et 310 à 312 sont mises en œuvre par le dispositif externe 15 et l'objet connecté 12 tel que décrit en relation avec la Fig. 3A, et les étapes 4071 à 4078, 413 et 414 sont mises en œuvre par l'objet connecté 12 et le serveur LNS 10 tel que décrit en relation avec la Fig. 3B. Lorsqu'un même paramètre a été transmis à la fois par le dispositif externe 15 et le serveur LNS 10, le paramètre transmis par le serveur 10 n'est pas pris en compte lors de la configuration de l'objet connecté 12. Dans ce mode de réalisation, l'activation de l'objet connecté 12 est prise en charge conjointement par le dispositif externe 15 et le serveur LNS 10.

## Revendications

1. Procédé sécurisé d'activation d'un objet connecté (12) lors de son insertion dans un réseau sans fil Low Power Wide Area Network, LPWAN (1), le procédé comprend lorsqu'il est mis en œuvre par l'objet connecté (12) :
- détecter (301), dans un mode de veille où seul un module (121) de l'objet connecté (12), destiné à détecter un premier signal, est activé, ledit premier signal transmis par un dispositif externe (15);
- lorsque le premier signal possède des caractéristiques prédéfinies, passer (302) l'objet connecté (12) du mode de veille à un mode actif;
- recevoir (304), dans le mode actif, un second signal comprenant une signature de la part du dispositif externe (15) et
- vérifier (305) que la signature est conforme à une signature prédéfinie et, lorsque la signature est conforme à la signature prédéfinie, obtenir (3054, 407) des paramètres de configuration depuis un serveur (10) dudit réseau (1), configurer (308) l'objet connecté selon les paramètres de configuration obtenus et transmettre (309, 4071) un message de demande de connexion audit réseau ;
**caractérisé en ce que** le procédé comprend :
au moins une partie des paramètres de configuration est reçue dans un message transmis par le serveur (10) dudit réseau (1) suite à la transmission (4071) du message de demande de connexion audit réseau (1) par l'objet connecté (12) ;
et **en ce que**
suite à la transmission (4071) du message de demande de connexion audit réseau (1) par l'objet connecté (12) et préalablement à la réception (4078) d'un message comprenant lesdits paramètres, l'objet connecté reçoit (4074) un message d'autorisation de connexion au réseau (1) de la part du serveur (10) comprenant une information indiquant que le serveur (10) a des paramètres de configuration à transmettre à l'objet connecté (12) et transmet (4075) un message d'accusé de réception pour ledit message d'autorisation de manière à provoquer un envoi (4077) par le serveur du message comprenant lesdits paramètres.

2. Procédé selon la revendication 1, **caractérisé en ce que** l'objet connecté (12) est identifié par un premier identifiant d'objet connecté et **en ce que** le second signal comprend une information représentative d'un certificat du dispositif externe, une première empreinte calculée à partir dudit certificat, et une information représentative d'un second identifiant d'objet connecté, la signature étant conforme à la signature prédéfinie lorsqu'une seconde empreinte calculée (3051) par l'objet connecté (12) à partir dudit certificat est égale à une troisième empreinte calculée par l'objet connecté à partir de la première empreinte et lorsque l'information représentative du second identifiant d'objet connecté correspond au premier identifiant d'objet connecté.

3. Procédé selon la revendication 2, **caractérisé en ce qu'**une partie des paramètres de configuration sont donnés par le dispositif externe (15) dans le second signal.

4. Procédé selon l'une quelconque des revendications précédentes **caractérisé en ce que** ledit réseau (1) est un réseau Long Range, LoRa et chaque communication entre l'objet connecté et le serveur se fait par l'intermédiaire d'une passerelle (11) dudit réseau (1).

5. Dispositif (12) de type objet connecté comprenant des moyens pour mettre en œuvre le procédé selon l'une quelconque des revendications 1 à 5.

6. Programme d'ordinateur, **caractérisé en ce qu'**il comprend des instructions pour mettre en œuvre, par un dispositif (120), le procédé selon l'une quelconque des revendications 1 à 5, lorsque ledit programme est exécuté par un processeur dudit dispositif (120).

7. Moyens de stockage, **caractérisés en ce qu'**ils stockent un programme d'ordinateur comprenant des instructions pour mettre en œuvre, par un dispositif (120), le procédé selon l'une quelconque des revendications 1 à 5, lorsque ledit programme est exécuté par un processeur dudit dispositif (120).

## Patentansprüche

1. Sicheres Verfahren zur Aktivierung eines angeschlossenen Objekts (12) bei dessen Einbindung in ein drahtloses Netz Low Power Wide Area Network, LPWAN (1), wobei das Verfahren umfasst, wenn es von dem angeschlossenen Objekt (12) durchgeführt wird:
- Erkennen (301), in einem Standby-Modus, in dem nur ein Modul (121) des angeschlossenen Objekts (12), das dazu bestimmt ist, ein erstes Signal zu erkennen, aktiviert ist, des ersten Signals, das von einer externen Vorrichtung (15) übertragen wird;
- wenn das erste Signal vordefinierte Merkmale besitzt, Überführen (302) des angeschlossenen Objekts (12) aus dem Standby-Modus in einen aktiven Modus;
- Empfangen (304), im aktiven Modus, eines zweiten Signals, das eine Signatur umfasst, von der externen Vorrichtung (15), und
- Überprüfen (305), ob die Signatur mit einer vordefinierten Signatur konform ist, und wenn die Signatur mit der vordefinierten Signatur konform ist, Erhalten (3054, 407) von Konfigurationsparametern von einem Server (10) des Netzes (1), Konfigurieren (308) des angeschlossenen Objekts gemäß den erhaltenen Konfigurationsparametern und Übertragen (309, 4071) einer Anforderungsnachricht für eine Verbindung mit dem Netz;
**dadurch gekennzeichnet, dass** das Verfahren umfasst:
dass wenigstens ein Teil der Konfigurationsparameter in einer Nachricht empfangen wird, die vom Server (10) des Netzes (1) im Anschluss an die Übertragung (4071) der Anforderungsnachricht für eine Verbindung mit dem Netz (1) durch das angeschlossene Objekt (12) übertragen wird;
und dadurch, dass
im Anschluss an die Übertragung (4071) der Anforderungsnachricht für eine Verbindung mit dem Netz (1) durch das angeschlossene Objekt (12) und vor dem Empfang (4078) einer Nachricht, welche die Parameter umfasst, das angeschlossene Objekt eine Autorisierungsnachricht für eine Verbindung mit dem Netz (1) vom Server (10) empfängt (4074), die eine Information umfasst, welche angibt, dass der Server (10) Konfigurationsparameter hat, die an das angeschlossene Objekt (12) zu übertragen sind, und eine Empfangsbestätigungsnachricht für die Autorisierungsnachricht überträgt (4075), um ein Senden (4077) der die Parameter umfassenden Nachricht durch den Server zu bewirken.

2. Verfahren nach Anspruch 1, **dadurch gekennzeichnet, dass** das angeschlossene Objekt (12) durch eine erste Kennung des angeschlossenen Objekts identifiziert ist, und dadurch, dass das zweite Signal eine Information, die für ein Zertifikat der externen Vorrichtung repräsentativ ist, einen aus dem Zertifikat berechneten ersten Fingerabdruck und eine Information, die für eine zweite Kennung des angeschlossenen Objekts repräsentativ ist, umfasst, wobei die Signatur mit der vordefinierten Signatur konform ist, wenn ein von dem angeschlossenen Objekt (12) aus dem Zertifikat berechneter (3051) zweiter Fingerabdruck gleich einem von dem angeschlossenen Objekt aus dem ersten Fingerabdruck berechneten dritten Fingerabdruck ist, und wenn die Information, die für die zweite Kennung des angeschlossenen Objekts repräsentativ ist, der ersten Kennung des angeschlossenen Objekts entspricht.

3. Verfahren nach Anspruch 2, **dadurch gekennzeichnet, dass** ein Teil der Konfigurationsparameter von der externen Vorrichtung (15) im zweiten Signal geliefert wird.

4. Verfahren nach einem der vorhergehenden Ansprüche, **dadurch gekennzeichnet, dass** das Netz (1) ein Long-Range-Netz, LoRa Netz, ist und jede Kommunikation zwischen dem angeschlossenen Objekt und dem Server über ein Gateway (11) des Netzes (1) erfolgt.

5. Vorrichtung (12) vom Typ eines angeschlossenen Objekts, welche Mittel zur Durchführung des Verfahrens nach einem der Ansprüche 1 bis 5 umfasst.

6. Computerprogramm, **dadurch gekennzeichnet, dass** es Anweisungen zur Durchführung, durch eine Vorrichtung (120), des Verfahrens nach einem der Ansprüche 1 bis 5, wenn das Programm von einem Prozessor der Vorrichtung (120) ausgeführt wird, umfasst.

7. Speichermittel, **dadurch gekennzeichnet, dass** sie ein Computerprogramm speichern, welches Anweisungen zur Durchführung, durch eine Vorrichtung (120), des Verfahrens nach einem der Ansprüche 1 bis 5, wenn das Programm von einem Prozessor der Vorrichtung (120) ausgeführt wird, umfasst.

## Claims

1. Method for activating a connected object (12) during insertion thereof in a Low Power Wide Area Network LPWAN wireless network, the method comprises when it is implemented by the connected object (12):
detecting (301), in a standby mode, where only one module (121) of the connected object (12) intended for detecting a first signal is activated, said first signal transmitted by an external device (15);
when the first signal has predefined characteristics, making the connected object (12) pass (302) from the standby mode to an active mode;
receiving (304), in the active mode, a second signal comprising a signature from the external device (15);
checking (305) that the signature is in accordance with a predefined signature, and
when the signature is in accordance with the predefined signature, obtaining (3054, 407) configuration parameters from a server (10) of said network (1), configuring (308) the connected object in accordance with the obtained configuration parameters and transmitting (309, 4071) a message requesting connection to said network;
**characterised in that** the method comprises:
at least some of the configuration parameters are received in a message transmitted by the server (10) of said network (1) following the transmission (4071) of the message requesting connection to said network (1) by the connected object (12);
and **in that**
following the transmission (4071) of the message requesting connection to said network (1) by the connected object (12) and prior to the reception (4078) of a message comprising said parameters, the connected object receives (4074) from the server (10) an authorization message authorizing connection to the network (1) comprising information indicating that the server (10) has configuration parameters to transmit to the connected object (12) and transmits (4075) an acknowledgement message acknowledging said authorization message so as to cause the server to send (4077) the message comprising said parameters.

2. Method according to claim 1, **characterised in that** the connected object (12) is identified by a first connected-object identifier and **in that** the second signal comprises information representing a certificate of the external device, a first hash calculated from said certificate, and information representing a second connected-object identifier, the signature being in accordance with the predefined signature when a second hash calculated (3051) by the connected object (12) from said certificate is equal to a third hash calculated by the connected object from the first hash and when the information representing the second connected-object identifier corresponds to the first connected-object identifier.

3. Method according to claim 2, **characterised in that** some of the configuration parameters are given by the external device (15) in the second signal.

4. Method according to any of the preceding claims, **characterised in that** said network (1) is a long range LoRa network and each communication between the connected object and the server is done through a gateway (11) of said network (1).

5. Device (12) of the connected-object type comprising means for implementing the method according to any of claims 1 to 5.

6. Computer program, **characterised in that** it comprises instructions for implementing, by a device (120), the method according to any of claims 1 to 5, when said program is executed by a processor of said device (120).

7. Storage means, **characterised in that** they store a computer program comprising instructions for implementing, by a device (120), the method according to any of claims 1 to 5, when said program is executed by a processor of said device (120).
